# EUROPÄISCHE PATENTANMELDUNG

(11) **EP 1 024 375 A2**
(43) Veröffentlichungstag der Anmeldung: **02.08.2000**
(21) Anmeldenummer: 99123448.5
(22) Anmeldetag: 24.11.1999
(51) Int. Cl.: G01V 3/15

(54) **Metalldetektor mit Suchkopf**

(30) Priorität: 26.01.1999 DE 29901297 U
(71) Anmelder: Ebinger, Klaus, D-51149 Köln (DE)
(72) Erfinder: Ebinger, Klaus, D-51143 Köln (DE)
(74) Vertreter: Heim, Hans-Karl, Dipl.-Ing.

(57) **Zusammenfassung**

Die Erfindung betrifft einen Metalldetektor mit Suchkopf, wobei in dem Suchkopf mindestens ein Umwandlungselement zur Umwandlung von Sonnenenergie in elektrische Energie vorgesehen ist.

## Beschreibung

Die Erfindung betrifft einen Metalldetektor mit Suchkopf.

Metalldetektoren werden beispielsweise zur Minensuche bei der Kampfmittelräumung eingesetzt. Im allgemeinen weisen die Vorrichtungen einen Suchkopf auf, welcher eine oder mehrere Magnetspulen enthält. Der Suchkopf wird über das zu untersuchende Gelände geführt, wobei die Wechselwirkung des von den Magnetspulen erzeugten Magnetfeldes mit Metallteilen mittels einer Nachweiselektronik nachgewiesen und über eine Auswerte- und Anzeigeelektronik in ein Signal umgesetzt wird. Folglich ist zum Betreiben von Metalldetektoren die Bereitstellung elektrischer Energie erforderlich.

Da die Kampfmittelräumung im allgemeinen im freien Gelände erfolgt, muß die Energie unabhängig von stationären Spannungsquellen zur Verfügung stehen. Daher werden bei herkömmlichen Systemen Batterien verwendet, die beispielsweise in einem ein Tragrohr des Detektors verlängernden Batteriefach angeordnet sind. Im Normalfall ist somit ein zuverlässiger Betrieb der Metalldetektoren gewährleistet.

Allerdings ist der Energieinhalt von Batterien oder Akkumulatoren begrenzt, so daß es immer wieder erforderlich ist, während der Sucharbeit verbrauchte Batterien durch frische Batterien zu ersetzten. Weiterhin muß der Anwender des Metalldetektors stets auf den Ladungszustand der Batterien achten, da eine unbemerkte Entladung insbesondere bei der Minensuche eine Gefahr für Leib und Leben bedeuten kann. Ferner ist es speziell in Ländern der Dritten Welt häufig schwierig für ausreichenden Batterienachschub zu sorgen. Außerdem sind Batterien vielseitig einsetzbar, was zu einem beachtlichen Schwund führt.

Der Erfindung liegt die **Aufgabe** zugrunde, einen Metalldetektor zur Verfügung zu stellen, mit dem die genannten Nachteile ausgeräumt werden und welcher insbesondere ohne Batterien auskommt.

Diese Aufgabe wird mit den Merkmalen des Anspruches 1 gelöst.

Danach ist in dem Suchkopf mindestens ein Umwandlungselement zur Umwandlung von Sonnenenergie in elektrische Energie vorgesehen. Da die Kampfmittelräumung häufig in südlichen Ländern der Dritten Welt erfolgt, bietet sich die Ausnutzung von Sonnenenergie besonders an. Moderne Detektorelektroniken zeigen einen so geringen Energieverbrauch, daß mit der modernen Solartechnik eine ausreichende elektrische Leistung zum Betrieb von Metalldetektoren bereitgestellt werden kann.

Besonders vorteilhaft weist der Suchkopf zwei Gehäuseteile auf, wobei das erste Gehäuseteil das mindestens eine Umwandlungselement aufnimmt und das zweite Gehäuseteil mindestens eine Suchspule aufnimmt. Auf diese Weise sind die Suchspule und die Umwandlungselemente getrennt voneinander angeordnet, was insbesondere bei einer Wartung oder Reparatur vorteilhaft sein kann. Ferner können durch die Verwendung von zwei Gehäuseteilen herkömmliche Spulen sowie Spulengehäuse bei dem erfindunsgemäßen Metalldetektor eingesetzt werden.

Besonders vorteilhaft ist es, wenn die Gehäuseteile schwenkbar miteinander verbunden sind. Damit läßt sich insbesondere die Suchspule in ihrer Ausrichtung den Geländegegebenheiten anpassen. Ferner ist der Winkel der Umwandlungselemente bezüglich der Einfallsrichtung des Lichtes variabel. Weiterhin ist der Metalldetektor von Anwendern mit unterschiedlicher Körpergröße verwendbar.

Vorzugsweise ist das erste Gehäuseteil in Verlängerung eines Tragrohres angeordnet. Da das Tragrohr beim Einsatz der Metalldetektoren im allgemeinen von dem Anwender schräg nach unten zu dem Suchkopf verläuft, ergibt sich in Verlängerung des Tragrohres eine günstige Anordnungsmöglichkeit für die Umwandlungselemente im Hinblick auf die Einfallsrichtung des Lichtes. Ferner sind häufig elektronische Elemente im Inneren des Tragrohres angeordnet, so daß die energieerzeugenden Umwandlungselemente bei der Anordnung des ersten Gehäuseteils in Verlängerung des Tragrohres eine vorteilhafte Nähe zu der Elektronik aufweisen.

Bevorzugt ist das mindestens eine Umwandlungselement in einer Ebene angeordnet, die einen Winkel zwischen 20° und 70° mit der durch eine Suchspule festgelegten Ebene bildet. Damit besteht hinreichende Flexibilität im Hinblick auf die Ausrichtung der Suchspule bezüglich der Geländegegebenheiten sowie die Ausrichtung der Umwandlungselemente bezüglich des Lichteinfalls.

Dabei ist es zu bevorzugen, daß die Ebene, in der das mindestens eine Umwandlungselement angeordnet ist, parallel zum Tragrohr ist. Auf diese Weise ist der Anwender stets über die Ausrichtung der Komponenten orientiert.

Es kann aber auch vorteilhaft sein, wenn die Ebene, in der das mindestens eine Umwandlungselement angeordnet ist, unabhängig von der Ausrichtung des Tragrohres verschwenkbar ist. Durch diesen Umstand kann beispielsweise ein groß gewachsener Anwender, bei dem das Tragrohr im allgemeinen vergleichsweise steil angeordnet ist, gleichwohl die Ebene der Umwandlungselemente in einen spitzen Winkel zur Ebene der Suchspule bringen und so etwa einen hohen Sonnenstand ausnutzen.

Bevorzugt ist das mindestens eine Umwandlungselement in dem ersten Gehäuseteil versenkt, und eine Oberfläche des mindestens einen Umwandlungselementes fluchtet mit einer Oberfläche des ersten Gehäuseteils. Durch diese Ausbildung einer quasi einheitlichen Oberfläche wird die Ausbildung von Stoßkanten, die zu Beschädigungen führen können, ebenso wie die Ausbildung von "Schmutzecken" vermieden.

Besonders vorteilhaft ist es, wenn von der elektrischen Energie des mindestens einen Umwandlungselementes speisbare Akkumulatoren vorgesehen sind. Damit arbeitet der Detektor stets zuverlässig, unabhängig von den aktuellen Lichtverhältnissen; die Akkumulatoren wirken als Puffer für die direkte Energieversorgung durch die Umwandlungselemente.

Vorzugsweise handelt es sich bei den Umwandlungselementen um Solarzellen. Diese bekannte Solartechnik bietet eine besonders einfache Möglichkeit, eine Elektronik zuverlässig mit elektrischer Energie zu versorgen.

Die Erfindung wird nun im einzelnen mit Bezug auf die begleitenden Zeichnungen anhand eines Ausführungsbeispiels erläutert.
- Fig. 1: zeigt einen Teil eines erfindungsgemäßen Metalldetektors;
- Fig. 2: zeigt ein Gehäuseteil eines erfindungsgemäßen Metalldetektors in Explosionsdarstellung; und
- Fig. 3: zeigt das Gehäuseteil gemäß Figur 2 in zusammengebautem Zustand.

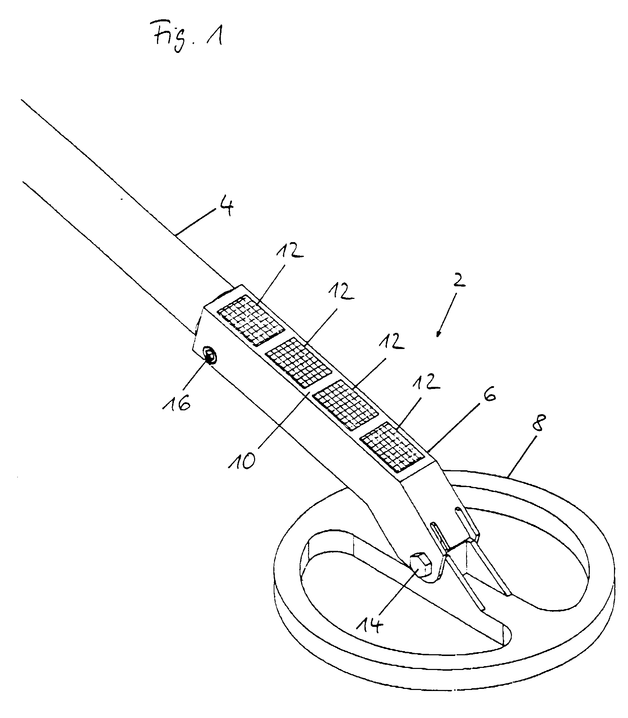

In Fig. 1 ist ein Teil eines erfindungsgemäßen Metalldetektors dargestellt. Es ist ein Suchkopf 2 vorgesehen, der an einem Tragrohr 4 befestigt ist. Der Suchkopf 2 weist zwei Gehäuseteile 6, 8 auf. Das erste Gehbäuseteil 6 beherbergt in einer seiner Oberflächen 10 vier Anordnungen aus Solarzellen 12. Das zweite Gehäuseteil 8 beherbergt die Suchspulen des Metalldetektors. Die Gehäuseteile 6, 8 sind gelenkig miteinander verbunden, wobei die Gelenkachse durch eine Schraube 14 realisiert ist. Das erste Gehäuseteil 6 ist über eine durch eine Schraube 16 vermittelte Klemmung mit dem Tragrohr 4 verbunden.

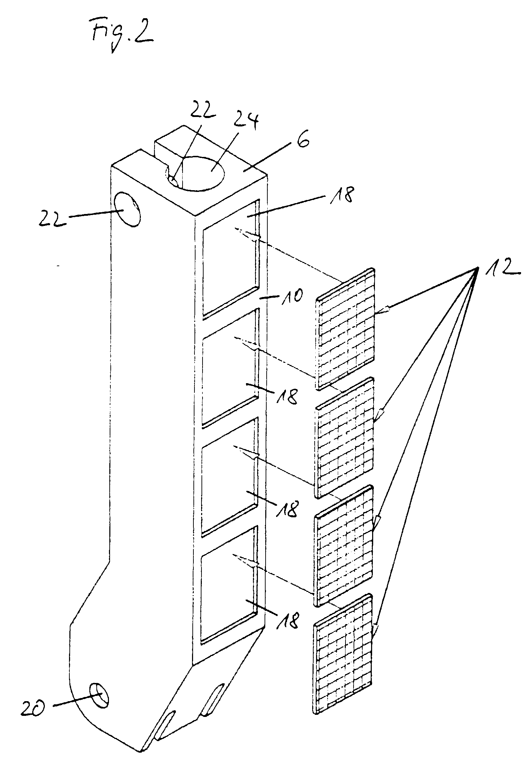

In Fig. 2 ist das erste Gehäuseteil 6 separat dargestellt. Für die vier Elemente aus Solarzellen 12 sind Ausfräsungen 18 vorgesehen, in welche die Solarzellen einsetzbar sind. Ferner sind ein Durchgangsloch 20 für die Gelenkachse sowie ein Durchgang 22 für die Schraubklemmung zu erkennen. Im Bereich des Durchganges 22 befindet sich die Einstecköffnung 24 für das Tragrohr 4 (vgl. Fig. 1).

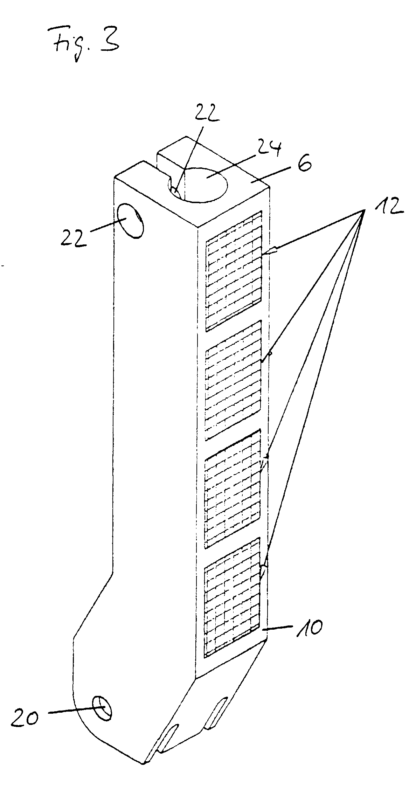

Fig. 3 stimmt mit der Darstellung in Fig. 2 überein. Allerdings sind die Solarzellen 12 in eingebautem Zustand dargestellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Metalldetektor mit Suchkopf (2),
dadurch **gekennzeichnet**,
daß in dem Suchkopf (2) mindestens ein Umwandlungselement (12) zur Umwandlung von Sonnenenergie in elektrische Energie vorgesehen ist.

2. Metalldetektor nach Anspruch 1,
dadurch **gekennzeichnet**,
daß der Suchkopf (2) zwei Gehäuseteile (6, 8) aufweist, wobei das erste Gehäuseteil (6), das mindestens eine Umwandlungselement (12) aufnimmt und das zweite Gehäuseteil (8) mindestens eine Suchspule aufnimmt.

3. Metalldetektor nach Anspruch 2,
dadurch **gekennzeichnet**,
daß die Gehäuseteile (6, 8) schwenkbar miteinander verbunden sind.

4. Metalldetektor nach Anspruch 2 oder 3,
dadurch **gekennzeichnet**,
daß das erste Gehäuseteil (6) in Verlängerung eines Tragrohrs (4) angeordnet ist.

5. Metalldetektor nach einem der vorangehenden Ansprüche,
dadurch **gekennzeichnet**,
daß das mindestens eine Umwandlungselement (12) in einer Ebene angeordnet ist, die einen Winkel zwischen 20° und 70° mit der durch eine Suchspule festgelegten Ebene bildet.

6. Metalldetektor nach Anspruch 5,
dadurch **gekennzeichnet**,
daß die Ebene, in der das mindestens eine Umwandlungselement (12) angeordnet ist, parallel zum Tragrohr (4) ist.

7. Metalldetektor nach Anspruch 5,
dadurch **gekennzeichnet**,
daß die Ebene, in der das mindestens eine Umwandlungselement angeordnet ist, unabhängig von der Ausrichtung des Tragrohrs (4) verschwenkbar ist.

8. Metalldetektor nach einem der Ansprüche 2 bis 7,
dadurch **gekennzeichnet**,
daß das mindestens eine Umwandlungselement (12) in dem ersten Gehäuseteil (6) versenkt ist und daß eine Oberfläche des mindestens einen Umwandlungselementes mit einer Oberfläche (10) des ersten Gehäuseteils (6) fluchtet.

9. Metalldetektor nach einem der vorangehenden Ansprüche,
dadurch **gekennzeichnet**,
daß von der elektrischen Energie des mindestens einen Umwandlungselementes (12) speisbare Akkkumulatoren vorgesehen sind.

10. Metalldetektor nach einem der vorangehenden Ansprüche,
dadurch **gekennzeichnet**,
daß die Umwandlungselemente Solarzellen (12) sind.
